# EUROPÄISCHE PATENTSCHRIFT

(11) **EP 1 216 163 B1**
(45) Veröffentlichungstag und Bekanntmachung des Hinweises auf die Patenterteilung: **03.11.2004**
(21) Anmeldenummer: 00962325.7
(22) Anmeldetag: 16.08.2000
(51) Int. Cl.: B60Q 3/02

(54) **VORRICHTUNG UND VERFAHREN ZUR ZENTRALEN STEUERUNG DER INNENRAUMBELEUCHTUNG EINES KRAFTFAHRZEUGES**
DEVICE AND METHOD FOR CENTRALLY CONTROLLING THE PASSENGER COMPARTMENT LIGHTING OF A MOTOR VEHICLE
DISPOSITIF ET PROCEDE DE COMMANDE CENTRALE DE L'ECLAIRAGE INTERIEUR D'UN VEHICULE A MOTEUR

(30) Priorität: 14.09.1999 DE 19943997
(43) Veröffentlichungstag der Anmeldung: 26.06.2002
(73) Patentinhaber: Volkswagen Aktiengesellschaft, 38436 Wolfsburg (DE)
(72) Erfinder: PIETSCH, Matthias, 38154 Königslutter (DE)
(74) Vertreter: Reitstötter - Kinzebach & Partner (GbR)
(86) Internationale Anmeldenummer: PCT/EP2000/007996
(87) Internationale Veröffentlichungsnummer: WO 2001/019644

(56) Entgegenhaltungen:
- EP-A- 0 755 825
- DE-A- 4 201 657
- DE-A- 19 831 722

## Beschreibung

Die Erfindung betrifft eine Vorrichtung sowie ein Verfahren zur zentralen Steuerung der Innenraumbeleuchtung eines Kraftfahrzeuges mit den Merkmalen des Oberbegriffs des Anspruchs 1 bzw. des Anspruchs 12. Die Vorrichtung umfaßt insbesondere eine zentrale Steuereinheit, mindestens ein Steuergerät und mindestens eine Beleuchtungseinheit, wobei jeweils mindestens eine Beleuchtungseinheit dem mindestens einem Steuergerät zugeordnet ist und diese Beleuchtungseinheit über das Steuergerät ansteuerbar ist.

Eine derartige Schaltung ist aus der EP 0 622 271 B1 bekannt. Danach wird die Innenbeleuchtung von Kraftfahrzeugen durch eine Steuereinheit abhängig von Betriebszustandsparametem des Kraftfahrzeugs selbsttätig, nach einem vorgegebenen Schaltprogramm ein- und ausgeschaltet. Es ist ferner ein willkürlich betätigbarer, elektrischer Befehlsgeber vorhanden, der mit der Steuereinheit über eine niedrig belastete Steuerleitung verbunden ist und die Steuereinheit zum Anschalten von Schaltprogrammen sowie zum Anschalten der Innenbeleuchtung über die niedrig belastete Steuerleitung ansteuert.

Bei dieser Schaltungsanordnung ist grundsätzlich das automatische Schaltprogramm eingestellt und dieses wird nur bei einer willkürlichen Betätigung des Befehlsgebers ausgeschaltet. Wird durch den Befehlsgeber die Innenbeleuchtung eingeschaltet, so kann je nach Ausführungsform die Innenbeleuchtung bei einem Zustandsparameter der repräsentativ für das Außerbetriebsetzen des Kraftfahrzeugs ist, ausgeschaltet werden.

Außerdem kann die Einschaltzeit der Innenbeleuchtung bei einer Betriebsart "dauer-ein" zeitlich begrenzt sein. Diese zeitliche Begrenzung kann auch auf einen beliebigen Wert eingestellt werden.

Die Innenbeleuchtung kann bei Aufgabe eines Verriegelungsbefehls für eine Fahrzeugtür bzw. für die Zentralverriegelungsanlage des Kraftfahrzeugs sofort, bzw. um einige Sekunden zeitlich verzögert, ausgeschaltet werden.

Über die Innenraumbeleuchtungssteuerung können unterschiedliche Fahrzeugelemente, wie z.B. die Türkontakte und das Funkschließsystem abgefragt werden. Abhängig vom Zustandsparameter dieser Fahrzeugelemente läßt sich die gesamte Innenraumbeleuchtung ansteuern.

Das Problem bei einer solchen Schaltungsanordnung ist, daß die Beleuchtungseinheiten der Innenraumbeleuchtung nicht separat geschaltet werden können, wodurch die einzelnen Fahrzeugbereiche nicht individuell ausgeleuchtet werden können.

Es ist ein weiteres Problem, daß für die Zustandsparameterabfrage der Fahrzeugelemente diese Elemente getrennt verkabelt und mit der Fahrzeuginnenraumbeleuchtungssteuerung verbunden werden müssen. Dadurch ergibt sich ein enormer Kostenaufwand sowie eine Vergrößerung des Fahrzeuggewichts.

Aus der DE 42 01 657 A1 ist eine Vorrichtung und ein Verfahren mit den Merkmalen. der Oberbegriffe der unabhängigen Ansprüche 1 und 12 bekannt. Durch die in dieser Druckschrift beschriebenen Vorrichtung können mehrere Leuchten im Fahrgastraum eines Fahrzeugs über ein Multiplexsteuersystem angesteuert werden. Eine zentrale Steuerung der Innenraumbeleuchtung mit Hilfe einer zentralen Steuereinheit ist dabei gezeigt. Die zentrale Steuereinheit ist mit mindestens einem Steuergerät über eine gemeinsame Datenleitung verbunden. Mindestens eine Beleuchtungseinheit ist über das Steuergerät ansteuerbar. Der Zustand eines Fahrzeugelementes ist über das mindestens eine Steuergerät abfragbar. Über die gemeinsame Datenleitung werden sowohl Steuerinformationen von der zentralen Steuereinheit an das Steuergerät als auch umgekehrt übertragen. Die Innenraumbeleuchtung lässt sich abhängig von gemessenen Zustandsparametern steuern. Nachteilhaft an dem in der DE 42 01 657 A1 beschriebenen Vorrichtung und dem dort beschriebenen Verfahren ist, dass keine weitergehenden Angaben für eine schnelle, komfortable und zuverlässige Bedienbarkeit gemacht werden.

Die sich daraus ergebende Aufgabe der vorliegenden Erfindung ist es, die Anzahl der zu verlegenden Kabel auf ein Minimum zu reduzieren aber dennoch eine komfortable Innenraumbeleuchtungssteuerung zur Verfugung zu stellen, mit der die einzelnen Fahrzeugbereiche individuell ausgeleuchtet werden können.

Diese Aufgabe wird durch eine Vorrichtung mit den Merkmalen des Anspruchs 1 und ein Verfahren mit den Merkmalen des Anspruchs 12 gelöst.

Zur Lösung dieser Aufgabe schlägt die vorliegende Erfindung vor, daß die zentrale Steuereinheit im Dachmodul des Kraftfahrzeugs angeordnet ist. Hierdurch kann die zentrale steuereinheit dem Fahrer leicht augänglich angeordnet werden. Ferner wird vorgeschlagen die zentrale Steuereinheit und das mindestens ein Steuergerät an eine gemeinsame Datenleitung anzuschließen, und den Zustand eines Fahrzeugelements über das mindestens eine, jeweils einem Fahrzeugelement zugeordnete. Steuergerät abzufragen, wobei Zustandsinformationen des Fahrzeugelements Ober die Datenleitung an die Steuereinheit übertragbar sind und wobei Steuerinformationen von der Steuereinheit an das Steuergerät über die Datenleitung übertragbar sind, derart, daß die Innenraumbeleuchtung abhängig von Zustandsparametem der Fahrzeugelemente steuerbar ist.

Dadurch ergibt sich der Vorteil, daß über nur eine Datenleitung alle Beleuchtungseinheiten sowie alle Fahrzeugelemente erreichbar sind. Somit verringert sich die Anzahl der verlegten Kabel, was eine Reduzierung des Fahrzeuggewichts und des Kostenaufwands bedeutet.

Außerdem kann abhängig von einzelnen Zustandsinformationen über Fahrzeugelemente, insbesondere der Schließanlage, der Zündung, des Handschuhfaches oder des Make-up Spiegels, eine bestimmte Gruppe von Beleuchtungseinheiten, insbesondere des Heckbereichs, des Fahrer-Fußraum-Bereichs, des Beifahrer-Fußraum-Bereichs oder des Fond-Fußraum-Bereichs, angesteuert werden. Dadurch ist eine individuelle Beleuchtung des Fahrzeuginnenraums möglich.

Daß die gemeinsame Datenleitung als Datenbus ausgelegt ist, ist eine weiter Ausgestaltung der vorliegenden Erfindung. Hierdurch können alle Steuergeräte an diesen Datenbus angeschlossen werden. Der Datenbus ermöglicht es, daß Steuerbefehle an mehrere Steuergeräte gleichzeitig gesendet werden können. Alle Steuergeräte horchen auf diesem Datenbus ob Steuerbefehle an sie gerichtet sind. In einem solchen Fall werden die jeweiligen Steuerfunktionen ausgeführt.

Daß die Zustandsinformationen und die Steuerinformationen seriell übertragbar sind, ist eine weiter Ausgestaltung der vorliegenden Erfindung. Dadurch können diese Informationen in einem Zeitmultiplexverfahren übertragen werden.

Daß die Zustandsinformationen und die Steuerinformationen parallel übertragbar sind, ist eine weiter Ausgestaltung der vorliegenden Erfindung. Dadurch ist unter anderem ein Frequenz- sowie ein Code-Multiplexverfahren möglich. Die parallele Übertragung ermöglicht eine hohe Übertragungsgeschwindigkeit.

Daß die zentrale Steuereinheit programmierbar ist, ist eine Ausgestaltung der vorliegenden Erfindung. Dadurch ist es möglich, die Innenraumbeleuchtungssteuenrng nach Inbetriebnahme des Fahrzeugs zu ändern. Hierbei kann nun auf individuelle Kundenwünsche eingegangen werden, oder Fehler in der Innenraumbeleuchtungsteuerung beseitigt werden. Außerdem können unterschiedliche Steuerungsprogramme ohne einen großen Mehraufwand getestet und implementiert werden.

Daß das Steuergerät mit Steuerfunktionen für die Beleuchtungseinheit programmierbar ist, ist eine weitere Ausgestaltung der vorliegenden Erfindung. Diese ermöglicht es, die Reaktionen des Steuergeräts auf die Steuerinformationen der zentralen Steuereinheit individuell zu programmieren. Hierbei können eventuell unterschiedliche Zeitvariablen für die jeweilige Beleuchtungssteuerung gesetzt werden sowie die Abfolge von Beleuchtungsintervallen gesetzt werden.

Daß die Steuerfunktion von der Steuereinheit anhängig von einer Zeitvorgabe durch eine Steuerinformation auslösbar ist, ist eine weitere Ausgestaltung der vorliegenden Erfindung. Dadurch ist es möglich, die Steuerfunktionen der Steuergeräte zentral von der Steuereinheit zu bedienen. Das bedeutet, daß verschiedene Steuerprogramme die Steuerfunktionen in den Steuergeräten in vorher programmierten zeitlichen Abfolgen auslösen.

Eine weitere Ausgestaltung der vorliegenden Erfindung ist es, daß die Steuerfunktionen von der Steuereinheit abhängig von Zustandsinformationen durch eine Steuerinformation auslösbar sind. Hierdurch kann innerhalb eines Steuerprogrammes auf verschiedene Zustandsparameter der Fahrzeugelemente reagiert werden und die entsprechenden Beleuchtungsfunktionen aktiviert werden.

Daß die Beleuchtungseinheit durch das ihr zugeordnete Steuergerät ein- und ausschaltbar ist, ist eine weitere Ausgestaltung der vorliegenden Erfindung. Dies bedeutet, daß die Beleuchtung in den einzelnen Fahrzeugbereichen getrennt schaltbar ist.

Daß die Beleuchtungseinheit durch das ihr zugeordnete Steuergerät mit einer Spannung versorgt wird, wobei die Spannung eine Funktion der Zeit ist, und wobei diese Funktion nach endlicher Zeit konstant ist, ist eine weitere Ausgestaltung der vorliegenden Erfindung. Das bedeutet, daß die Beleuchtungseinheit stufenlos ein- sowie ausschaltbar ist. Dies ermöglicht es, die Beleuchtung über eine frei definierbare Funktion zu dimmen. Hierdurch entsteht ein angenehmerer Beleuchtungseindruck.

Die Erfindung umfaßt ein Verfahren zur zentralen Steuerung der Innenraum beleuchtung eines Kraftfahrzeuges, mit Hilfe einer zentralen Steuereinheit, mindestens eines Steuergerätes und mindestens einer Beleuchtungseinheit, bei welchen über das Steuergerät ein Zustand eines Fahrzeugelementes abgefragt wird und mindestens eine Beleuchtungseinheit dem Steuergerät zugeordnet ist und diese Beleuchtungseinheit über das Steuergerät angesteuert wird, welches sich dadurch auszeichnet, daß die zentrale Steuereinheit und das Steuergerät an eine Datenleitung angeschlossen sind, und Zustandsinformationen des Fahrzeugelementes über die Datenleitung an die Steuereinheit übertragen werden und Steuerinformationen von der Steuereinheit an das Steuergerät über die Datenleitung übertragen werden. Bei diesem Verfahren ist die Übertragung der Steuerinformationen über die eine Datenleitung möglich. Dadurch können alte Steuergeräte, die an die Datenleitung angeschlossen sind, von der zentralen Steuereinheit angesteuert werden. Gemaß der Erfindung wird die Steuereinheit im Dachmodul des Kraftfahrzeugs angeordnet.

Es gibt nun eine Vielzahl von Möglichkeiten, die erfindungsgemäße Vorrichtung auszugestalten und weiterzubilden. Hierzu wird beispielsweise verwiesen einerseits auf die dem Patentanspruch 1 nachgeordneten Patentansprüche, andererseits auf die Beschreibung eines Ausführungsbeispiels der erfindungsgemäßen Vorrichtung in Verbindung mit der Zeichnung. In der Zeichnung zeigt:
Fig. 1 ein Blockdiagramm zur Vorrichtungsanordnung;
Fig. 2 ein zeitlicher Spannungsverlauf für die Ansteuerung der Beleuchtungseinheit.

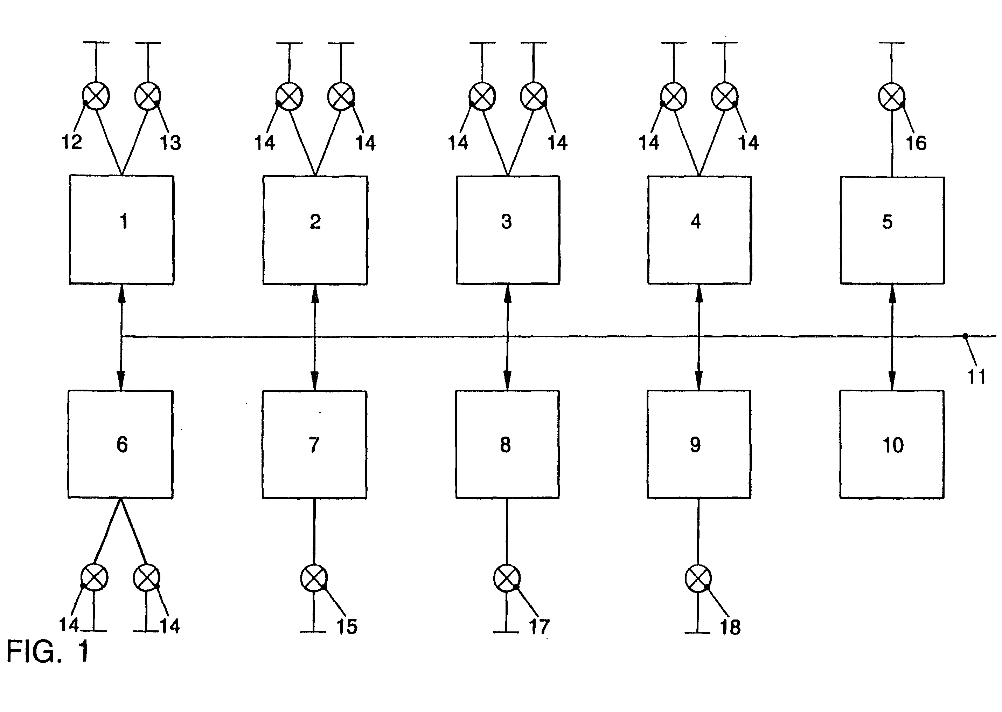

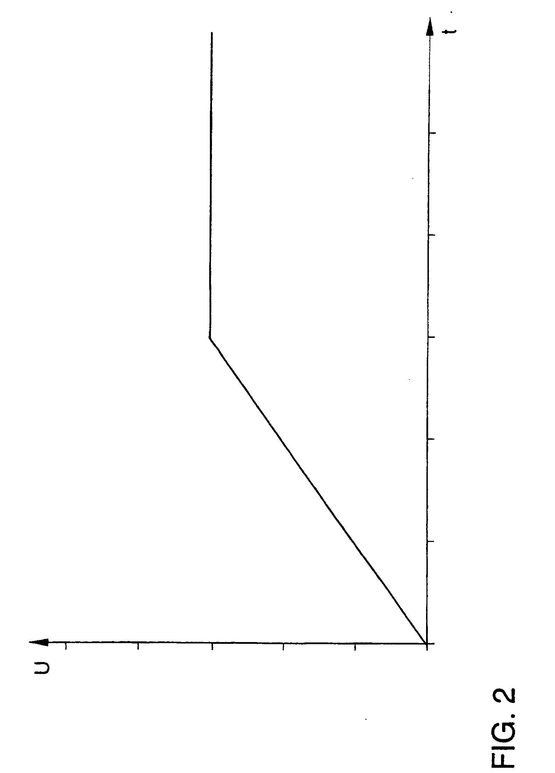

Fig. 1 zeigt eine Vorrichtungsanordnung, bei der eine zentrale Steuereinheit 1 an eine Datenleitung 11 angeschlossen ist. Über diese Datenleitung 11 sind die Steuergeräte 6 - 10 verschiedenster Fahrzeugelemente miteinander verbunden. Die zentrale Steuereinheit 1, welche in einem Dachmodul angeordnet ist, steuert die im Dach befindlichen Beleuchtungseinheiten wie Leselampe 12 und Einstiegsbeteuchtung 13. Nachdem das Schließanlagensteuergerät 6 mittels Funkfembedienung angesteuert wurde, sendet dieses über die Datenleitung 11 eine Information über ihren Status an die zentrale Steuereinheit 1. Dort wird ausgehend von der Statusinformation des Schließanlagensteuergerätes 6 eine Steuerinformation sowohl zurück an das Schließanlagensteuergerät 6 als auch an das Beifahrerbereichsteuergerät 2 und das Fahrerbereichsteuergerät 3 sowie das Fondbereichsteuergerät 4 gesendet. Diese Steuerinformation beinhaltet den Befehl, daß die Steuergeräte 2, 3, 4, 6 die ihnen zugeordneten Beleuchtungseinheiten 14 einschalten sollen. Dadurch wird die Spannung U, die an den Beleuchtungseinheiten 14 anliegt, nach einer wie in Fig. 2 zu erkennenden Rampenfunktion U(t) geregelt. Der Fahrer kann nun in ein vollkommen ausgeleuchtetes Fahrzeug einsteigen. Nachdem er die Zündung betätigt, meldet das Zündungssteuergerät 10 mit einer Statusinformation, welche über die Datenleitung 11 an die zentrale Steuereinheit 1 gesendet wird, daß die Zündung betätigt wurde. Daraufhin initiiert die zentrale Steuereinheit 1 mittels eines Steuerbefehls, daß die zur Zeit eingeschalteten Beleuchtungseinheiten 14 ausgeschaltet werden. Dazu kann auch ein zentraler Steuerbefehl, welcher von allen Steuergeräten 2 - 4, 6 erkannt wird, ausgesendet werden. Geht nun dieser Steuerbefehl bei den Steuergeräten 2- 4, 6 ein, so werden die den Steuergeräten zugeordneten Beleuchtungseinheiten 14 ausgeschaltet. Dieses Ausschalten der Beleuchtungseinheiten 14 kann über eine zeitliche Spannungsfunktion geschehen, welche nach endlicher Zeit auf einen minimal Wert abfällt. Über das Kofferraumsteuergerät 7 ist es möglich, daß die Beleuchtungseinheit 15 des Kofferraums nur beim Öffnen des Kofferraums angesteuert wird. Dazu wird vom Kofferraumsteuergerät 7 eine Statusinformation über den Schließzustand des Kofferraums an die zentrale Steuereinheit 1 über die Datenleitung 11 gesendet. In der zentralen Steuereinheit 1 wird diese Information wiederum ausgewertet und eine Steuerinformation auf die Datenleitung 11 gegeben. Diese Steuerinformation wird z.B. vom Kofferraumsteuergerät 7 sowie vom Heckbereichsteuergerät 5 empfangen und ausgewertet. Daraufhin werden die Beleuchtungseinheiten 15, 16 des Kofferraums und des Heckbereichs eingeschaltet.

Auch bei Öffnung des Handschuhfachs oder beim herunterklappen des Make-up-Spiegels ist es möglich, daß die jeweiligen Steuergeräte 8, 9 ihre Statusinformationen über die Datenleitung 11 an die zentrale Steuereinheit 1 senden. Dort werden die Statusinformationen ausgewertet und wiederum Steuerinformationen auf die Datenleitung 11 geschickt. Alle Steuergeräte 2-10, an die die jeweilige Steuerinformation gerichtet ist, erkennen dies und leiten daraufhin die entsprechenden Beleuchtungssteuerungen ein. Es ist denkbar, daß neben den hier aufgeführten Steuergeräten 2 - 10 weitere Steuergeräte an die Datenleitung 11 angeschlossen werden und somit auf weitere Zustandsinformationen von Fahrzeugelementen reagiert werden kann. Dadurch, daß die zentrale Steuereinheit 1 alle Statusinformationen auswertet und Steuerinformationen an die Datenleitung 11 gibt, können Programmänderungen in der zentralen Steuereinheit 1 vorgenommen werden, wobei sich diese Programmänderungen dann auf das gesamte Beleuchtungsmanagement auswirken.

In Fig. 2 ist ein möglicher Spannungsverlauf für die Beleuchtungseinheiten dargestellt. Nachdem ein Steuergerät 1 - 9 eine Steuerinformation über das Einschalten einer Beleuchtungseinheit 12 - 18 erhalten hat, regelt dieses die Spannung U über die Zeit (t), welche an der Beleuchtungseinheit 12 - 18 anliegt, entsprechend der Funktion aus Fig. 2. Dadurch ist ein allmähliches Ansteigen der Beleuchtungsintensität möglich. Weitere Spannungsveriäufe, welche mit einem konstanten Wert enden, sind durchaus denkbar und vermitteln eventuell einen angenehmeren Beleuchtungseindruck. Diese Funktionen können in den Steuergeräten 1 - 9 fest einprogrammiert sein oder aber im nachhinein geändert werden.

## Patentansprüche

1. Vorrichtung zur zentralen Steuerung der Innenraumbeleuchtung eines Kraftfahrzeuges, umfassend eine zentrale Steuereinheit (1), mindestens ein Steuergerät (2-10) und mindestens eine Beleuchtungseinheit (12-18), wobei jeweils mindestens eine Beleuchtungseinheit (12-18) dem mindestens einem Steuergerät (1-9) zugeordnet ist und diese Beleuchtungseinheit (12-18) über das Steuergerät (1-9) ansteuerbar ist, wobei die zentrale Steuereinheit (1) und das mindestens eine Steuergerät (2-10) an eine gemeinsame Datenleitung (11) anschließbar sind, wobei ein Zustand eines Fahrzeugelements über das mindestens eine, jeweils einem Fahrzeugelement zugeordnete, Steuergerät (2-10) abfragbar ist, wobei Zustandsinformationen des Fahrzeugelements über die Datenleitung (11) an die zentrale Steuereinheit (1) übertragbar sind und wobei Steuerinformationen von der zentralen Steuereinheit (1) an das mindestens eine Steuergerät (2-10) über die Datenleitung (11) übertragbar sind, derart, daß die Innenraumbeleuchtung (2-10) abhängig von Zustandsparametem der Fahrzeugelemente steuerbar ist **dadurch gekennzeichnet, daß** die zentrale Steuereinheit (1) im Dachmodul des Kraftfahrzeugs angeordnet ist.

2. Vorrichtung nach Anspruch 1, **dadurch gekennzeichnet, daß** die gemeinsame Datenleitung (11) als Datenbus ausgelegt ist.

3. Vorrichtung nach einem der vorhergehenden Ansprüchen, **dadurch gekennzeichnet, daß** die Zustandsinformationen und die Steuerinformationen seriell übertragbar sind.

4. Vorrichtung nach einem der vorhergehenden Ansprüchen, **dadurch gekennzeichnet, daß** die Zustandsinformationen und die Steuerinformationen parallel übertragbar sind.

5. Vorrichtung nach einem der vorhergehenden Ansprüchen, **dadurch gekennzeichnet, daß** die zentrale Steuereinheit (1) programmierbar ist.

6. Vorrichtung nach einem der vorhergehenden Ansprüchen, **dadurch gekennzeichnet, daß** das mindestens eine Steuergerät (2-10) mit Steuerfunktionen für die Beleuchtungseinheit programmierbar ist.

7. Vorrichtung nach einem der vorhergehenden Ansprüchen, **dadurch gekennzeichnet, daß** die Steuerfunktionen von der zentralen Steuereinheit (1) durch eine Steuerinformation auslösbar ist.

8. Vorrichtung nach einem der vorhergehenden Ansprüchen, **dadurch gekennzeichnet, daß** die Steuerfunktionen von der zentralen Steuereinheit (1) abhängig von einer Zeitvorgabe durch eine Steuerinformation auslösbar ist.

9. Vorrichtung nach einem der vorhergehenden Ansprüchen, **dadurch gekennzeichnet, daß** die Steuerfunktionen von der zentralen Steuereinheit (1) abhängig von Zustandsinformationen durch eine Steuerinformation auslösbar ist.

10. Vorrichtung nach einem der vorhergehenden Ansprüchen, **dadurch gekennzeichnet, daß** die Beleuchtungseinheit (12-18) durch das ihr zugeordnete Steuergerät (1-9) ein- und ausschaltbar ist.

11. Vorrichtung nach einem der vorhergehenden Ansprüchen, **dadurch gekennzeichnet, daß** die Beleuchtungseinheiten (12-18) durch das ihr zugeordnete Steuergerät (1-9) mit einer Spannung (U) versorgt wird, wobei die Spannung (U) eine Funktion der Zeit (t) ist und wobei diese Funktion nach endlicher Zeit konstant ist.

12. Verfahren zur zentralen Steuerung der Innenraumbeleuchtung eines Kraftfahrzeuges, bei dem mit Hilfe einer zentralen Steuereinheit (1), mindestens eines Steuergerätes (2-10) und mindestens einer Beleuchtungseinheit (12-18), jeweils mindestens eine Beleuchtungseinheit (14-18) dem mindestens einem Steuergerät (2-10) zugeordnet wird und diese Beleuchtungseinheit (14-18) über das Steuergerät (2-10) angesteuert wird,
wobei die zentrale Steuereinheit (1) und das mindestens eine Steuergerät (2-10) an eine gemeinsame Datenleitung (11) angeschlossen werden, und ein Zustand eines Fahrzeugelements über das mindestens eine, jeweils einem Fahrzeugelement zugeordnete Steuergerät (2-10), abgefragt wird, und wobei Zustandsinformationen des Fahrzeugelementes über die Datenleitung (11) an die zentrale Steuereinheit (1) übertragen werden und dabei Steuerinformationen von der zentralen Steuereinheit (1) an das Steuergerät (2-10) über die Datenleitung (11) übertragen werden, derart dass die Innenraumbefeuchtung abhängig von Zustandsparametern der Fahrzeugelemente gesteuert werden, **dadurch gekennzeichnet, daß** die zentrale Steuereinheit (1) im Dachmodul des Kraftfahrzeuges angeordnet wird.

## Claims

1. Device for centrally controlling the passenger compartment lighting of a motor vehicle, comprising a central control unit (1), at least one controller (2-10) and at least one lighting unit (12-18), in each case at least one lighting unit (12-18) being assigned to the at least one controller (1-9), and this lighting unit (12-18) being capable of being actuated by means of the controller (1-9), the central control unit (1) and the at least one controller (2-10) being capable of being connected to a common data line (11), it being possible to interrogate a state of a vehicle element by means of the at least one controller (2-10) which is respectively assigned to a vehicle element, it being possible to transmit state information of the vehicle element to the central control unit (1) via the data line (11), and it being possible to transmit control information from the central control unit (1) to the at least one controller (2-10) via the data line (11), in such a way that the passenger compartment lighting (2-10) can be controlled as a function of state parameters of the vehicle elements, **characterized in that** the central control unit (1) is arranged in the roof module of the motor vehicle.

2. Device according to Claim 1, **characterized in that** the common data line (11) is configured as a data bus.

3. Device according to one of the preceding claims, **characterized in that** the state information and the control information can be transmitted serially.

4. Device according to one of the preceding claims, **characterized in that** the state information and the control information can be transmitted in parallel.

5. Device according to one of the preceding claims, **characterized in that** the central control unit (1) can be programmed.

6. Device according to one of the preceding claims, **characterized in that** the at least one controller (2-10) can be programmed with control functions for the lighting unit.

7. Device according to one of the preceding claims, **characterized in that** the control functions can be triggered by the central control unit (1) by means of control information.

8. Device according to one of the preceding claims, **characterized in that** the control function can be triggered by the central control unit (1) by means of control information as a function of a time specification.

9. Device according to one of the preceding claims, **characterized in that** the control functions can be triggered by the central control unit (1) by means of control information as a function of state information.

10. Device according to one of the preceding claims, **characterized in that** the lighting unit (12-18) can be switched on and off by means of the controller (1-9) which is assigned to it.

11. Device according to one of the preceding claims, **characterized in that** the lighting units (12-18) are supplied with a voltage (U) by means of the controller (1-9) which is assigned to them, the voltage (U) being a function of the time (t), and this function being constant according to finite time.

12. Method for centrally controlling the passenger compartment lighting of a motor vehicle, in which in each case at least one lighting unit (14-18) is assigned to the at least one controller (2-10) using a central control unit (1), at least one controller (2-10) and at least one lighting unit (12-18), and this lighting unit (14-18) is actuated by means of the controller (2-10), the central unit (1) and the at least one controller (2-10) being connected to a common data line (11), and a state of a vehicle element being interrogated by means of the at least one controller (2-10) which is assigned in each case to one vehicle element, and state information of the vehicle element being transmitted to the central control unit (1) via the data line (11), and at the same time control information being transmitted from the central control unit (1) to the controller (2-10) via the data line (11), in such a way that the passenger compartment lighting is controlled as a function of state parameters of the vehicle elements, **characterized in that** the central control unit (1) is arranged in the roof module of the motor vehicle.

## Revendications

1. Dispositif de commande centralisée de l'éclairage intérieur d'un véhicule automobile, qui comprend une unité centrale de commande (1), au moins un appareil de commande (2-10) et au moins une unité d'éclairage (12-18), au moins chaque unité d'éclairage (12-18) étant associée à au moins un appareil de commande (1-9), cette unité d'éclairage (12-18) pouvant être commandée par cet appareil de commande (1-9), l'unité centrale de commande (1) et l'appareil de commande (2-10) au moins prévu pouvant être raccordés à un conducteur de données commun (11), l'état d'un élément du véhicule pouvant être interrogé par l'appareil de commande (2-10) au moins prévu et associé à chaque élément du véhicule, des informations d'état de l'élément du véhicule pouvant être transmises à l'unité centrale de commande (1) par le conducteur de données (11) et des informations de commande pouvant être transmises sur le conducteur de données (11) par l'unité centrale de commande (1) à l'appareil de commande (2-10) au moins prévu, de telle sorte que l'éclairage (2-10) de l'espace intérieur puisse être commandé en fonction des paramètres d'état des éléments du véhicule, **caractérisé en ce que** l'unité centrale de commande (1) est disposée dans le module de toit du véhicule automobile.

2. Dispositif selon la revendication 1, **caractérisé en ce que** le conducteur de données commun (11) est configuré comme bus de données.

3. Dispositif selon l'une des revendications précédentes, **caractérisé en ce que** les informations d'état et les informations de commande peuvent être transmises en mode série.

4. Dispositif selon l'une des revendications précédentes, **caractérisé en ce que** les informations d'état et les informations de commande peuvent être transmises en mode parallèle.

5. Dispositif selon l'une des revendications précédentes, **caractérisé en ce que** l'unité centrale de commande (1) est programmable.

6. Dispositif selon l'une des revendications précédentes, **caractérisé en ce que** les appareils de commande (2-10) au moins prévus peuvent être programmés à l'aide de fonctions de commande de l'unité d'éclairage.

7. Dispositif selon l'une des revendications précédentes, **caractérisé en ce que** les fonctions de commande peuvent être déclenchées par une unité de commande (1), par l'intermédiaire d'une information de commande.

8. Dispositif selon l'une des revendications précédentes, **caractérisé en ce que** les fonctions de commande peuvent être déclenchées par l'unité centrale de commande (1) en fonction de prescriptions de temporisation, par l'intermédiaire d'une information de commande.

9. Dispositif selon l'une des revendications précédentes, **caractérisé en ce que** les fonctions de commande peuvent être déclenchées par l'unité centrale de commande (1) en fonction d'informations d'état, par l'intermédiaire d'une information de commande.

10. Dispositif selon l'une des revendications précédentes, **caractérisé en ce que** l'unité d'éclairage (12-18) peut être branchée et débranchée par l'appareil de commande (1-9) qui lui est associé.

11. Dispositif selon l'une des revendications précédentes, **caractérisé en ce que** les unités d'éclairage (12-18) sont alimentées en une tension (U) par les appareils de commande (1-9) qui leur sont associés, la tension (U) étant une fonction du temps (t) et cette fonction étant constante après un temps infini.

12. Procédé de commande centralisée de l'éclairage de l'espace intérieur d'un véhicule automobile, dans lequel à l'aide d'une unité centrale de commande (1), d'au moins un appareil de commande (2-10) et d'au moins une unité d'éclairage (12-18), au moins une unité d'éclairage (14-18) est associée à au moins un appareil de commande (2-10), cette unité de commande (14-18) étant commandée par l'appareil de commande (2-10), l'unité centrale de commande (1) et les appareils de commande (2-10) au moins prévus étant raccordés à un conducteur de données commun (11), un état d'un élément du véhicule pouvant être interrogé par au moins un appareil de commande (2-10) associé à un élément respectif du véhicule, des informations d'état de l'élément du véhicule pouvant être transmises par le conducteur de données (11) à l'unité centrale de commande (1) et des informations de commande pouvant être transmises de l'unité centrale de commande (1) à l'appareil de commande (2-10) par le conducteur de données (11), de telle sorte que l'éclairage de l'espace intérieur soit commandé en fonction des paramètres d'état des éléments du véhicule, **caractérisé en ce que** l'unité centrale de commande (1) est disposée dans le module de toit du véhicule automobile.
